# EUROPEAN PATENT APPLICATION

(11) **EP 4 137 984 A1**
(43) Date of publication of application: **22.02.2023**
(21) Application number: 21191461.9
(22) Date of filing: 16.08.2021
(51) Int. Cl.: G06F 40/186, G06F 40/30

(54) **METHOD AND APPARATUS FOR TRANSFORMING AN INDUSTRIAL STANDARD SPECIFICATION INTO AT LEAST ONE INSTANTIATED RULE**

(71) Applicant: Siemens Aktiengesellschaft, 80333 München (DE)
(72) Inventor: Thuluva, Aparna Saisree, 81739 München (DE); Bareedu, Yashoda Saisree, 83024 Rosenheim (DE)

(57) **Abstract**

The present embodiments relate to a method for transforming an industrial standard specification into one or more semantically constrained rules. The rules are compliant with the industrial standard and may be used for amending an information model of an industrial automation control system. A template-based approach grants for an efficient way of identifying rules in industrial standard documents along with extracting, classifying, instantiating, and formalizing these rules with minimal user intervention or user input. Predefined rule templates may be created by experts and may be used for formalization still allowing a user to be involved for controlling or monitoring the process.

## Description

### TECHNICAL FIELD

The disclosed embodiments generally relate to the field of industrial automation control systems. Specifically, the disclosed embodiments relate to a computer-implemented method and apparatus for transforming an industrial standard specification into at least one rule for amending an information model of an industrial automation control system.

### BACKGROUND

Industrial automation control systems are designed to capture real-world instrumentation data, e.g., sensor data and actuate responses in real time, while operating reliably and safely. In order to ensure seamless interaction of components involved within industrial automation control systems, conformity with industrial standards is required for such components. Conformity with current industrial standards is particularly necessary for communicative and software-technical behavior of components operating within or controlling the industrial automation control systems. In recent times, semantic web technologies including a usage of semantic information models have gained a predominant role in specifying communicative aspects of such components.

Information modelling is a key concept in the quest to enable industrial automation control systems not only to deliver or consume data but also the express a meaning of data. While this idea is still far from being globally realized, semantic web communities have produced industrial automation standards such as RDF, RDFS, OWL, SPARQL, etc. along with a large number of tools to efficiently create, store and query information models.

Industrial automation standards are set out in specification documents which are intended for human reading. These specification documents pertaining to the semantics of automation control systems and components usually contain thousands of pages of textual information. Some standardization bodies also offer machine-readable snippets of information models for download and for use in software development projects with the aim of easing a standard-compliant implementation of the industrial automation standard. Such machine-readable snippets, however, only represent implementation examples which are not constitutive for standard-compliant implementations.

In other words, these specifications are entirely defined in a textual format intended for human reading, particularly aimed at semantic experts as a target group, which means that solely semantic experts are able to understand these specifications and use their teaching for implementing semantic rules tailored to a given industrial automation system. There is currently no automated way of extracting information from industrial automation standards documents and formalizing it in a meaningful manner.

Further on, an implementation of industrial automation standards in an industrial automation control system requires both, semantic expertise for understanding and using semantic descriptions, and process skills of the specific industrial automation control system. Consequently, even the configuration for onboarding components within the industrial automation control system is challenging for a process engineer without special expertise in coding or amending formal semantic rules.

Accordingly, there is a need in the art for a standard-compliant implementation of semantic rules tailored to a given industrial automation system whereby the implementation process is at least partially severed from the burden of conceptually comprehending extensive corpora of present standard specification documents.

Further on, there is a need in the art for re-using existing standard-compliant semantic rule patterns, enabling amendments without needing to understand or re-code the underlying semantic descriptions.

Still further, there is a need in the art for supporting a process engineer in configuring a component for onboarding or maintaining an industrial automation control system without particular knowledge in coding semantic descriptions.

### SUMMARY AND DESCRIPTION

The present embodiments relate to a method for transforming an industrial standard specification into one or more semantically constrained rules. The rules are compliant with the industrial standard and may be used for amending an information model of an industrial automation control system. The method includes the steps of:
a) loading at least one text corpus pertaining to the industrial standard specification into a memory;
b) semantically processing, by a semantic processing module, the text corpus to identify one or more textual rule blocks and to extract at least one of said textual rule blocks;
c) classifying, by a classification module, the textual rule block into a plurality of rule categories to obtain a classified textual rule block;
d) assigning, by a mapping module, at least one rule template to the classified textual rule block, wherein said assigning is at least driven by one of said rule categories assigned to the classified textual rule block; and;
e) instantiating, by an instantiating module, the rule template being adapted by constraints of the information model of the industrial automation control system to obtain the instantiated rule.

According to an embodiment, step d) of instantiating said rule template may include or may be succeeded by the steps of:
e1) presenting, by the instantiating module, an editable representation of the rule template being adapted by said constraints of the information model to a user
e2) receiving, by the instantiating module, at least one input from the user to form an amended rule template; and;
e2) receiving, by the instantiating module, an input by the user concluding the act of said instantiating.

According to an embodiment, step d) of assigning said least one rule template to the classified textual rule block may include or may be succeeded by the steps of:
d1) presenting, by the mapping module, an editable representation of the rule template assigned to the classified textual rule block to a user for optionally receiving amendments from the user; and;
d2) receiving, by the mapping module, an input by the user concluding the act of said assigning.

According to an embodiment the at least one rule template may comprise one of:
- a cardinality rule;
- a datatype rule;
- a domain-range rule;
- a property rule;
- a value rule;
- a duplicate rule;
- an instances against types rule;
- a subtyping rule;
- a scope/access rule; and/or;
- a bidirectional property rule.

According to an embodiment the at least one rule template and/or the at least one instantiated rule may be expressed by a shape template expressed by a shapes constraint language (»SHACL«).

According to an embodiment, amending the information model of the industrial automation control system may include the steps of:
- querying the information model within a memory space of at least one server of the industrial automation control system;
- allocating an address space of the information model; and;
- loading the instantiated rule into the allocated address space of the information model.

According to an embodiment, the at least one component of the industrial automation control system may be an automation control server or an industrial device.

According to an embodiment, the information model may be organized in a graph database or knowledge graph.

According to an embodiment, the information model may be a central or decentral data base for hosting knowledge artefacts, in particular knowledge artefacts known as digital twins.

The present embodiments further relate to an apparatus for transforming an industrial standard specification into at least one instantiated rule for amending an information model of at least one component of an industrial automation control system, the method including the steps of:
a) a memory for being loaded with at least one text corpus pertaining to the industrial standard specification;
b) a semantic processing module for semantically processing the text corpus to identify one or more textual rule blocks and to extract at least one of said textual rule blocks;
c) a classification module for classifying the textual rule block into a plurality of rule categories to obtain a classified textual rule block;
d) a mapping module for assigning at least one rule template to the classified textual rule block, wherein said assigning is at least driven by one of said rule categories assigned to the classified textual rule block; and;
e) an instantiating module for instantiating the rule template being adapted by constraints of the information model of the industrial automation control system to obtain the instantiated rule.

A machine-readable medium may be provided by a storage device or other apparatus which is capable of hosting data in a non-transitory format. In an example, information stored or otherwise provided on a machine-readable medium may be representative of instructions, such as instructions themselves or a format from which the instructions may be derived. This format from which the instructions may be derived may include source code, encoded instructions (e.g., in compressed or encrypted form), packaged instructions (e.g., split into multiple packages), or the like.

The information representative of the instructions in the machine-readable medium may be processed by processing circuitry into the instructions to implement any of the operations discussed herein. For example, deriving the instructions from the information (e.g., processing by the processing circuitry) may include compiling (e.g., from source code, object code, etc.), interpreting, loading, organizing (e.g., dynamically or statically linking), encoding, decoding, encrypting, unencrypting, packaging, unpackaging, or otherwise manipulating the information into the instructions.

### BRIEF DESCRIPTION OF THE DRAWING

The objects as well as further advantages of the present embodiments will become more apparent and readily appreciated from the following description of the preferred embodiments, taken in conjunction with the accompanying drawing accompanying drawing of which:
- FIG. 1: Depicts a flowchart for describing an exemplary procedure according to an embodiment; and;
- FIG. 2: shows an exemplary user interface of an instantiating module according to an embodiment.

### DETAILED DESCRIPTION

Methods for transforming an industrial standard specification into at least one instantiated rule are disclosed. At present, industrial automation standards such as OPC UA, or IEC standards (e.g., IEC 61850), etc., are specified in specification documents intended for human reading. These specification documents pertaining to the semantics of automation control systems and components usually contain thousands of pages of textual information. The specification documents are defined in a textual format intended for human reading.

The IEC 61850 standard of the International Electrotechnical Commission (IEC) describes a general transmission protocol for protection and control technology in the industrial automation domain. The series of standards include general specifications for automation systems, functions and devices and for the exchange of information for protection, monitoring, control and measurement purposes.

OPC UA (Open Platform Communications Unified Architecture) is an industrial standard protocol of the OPC Foundation for manufacturer-independent communication with the purpose of interchanging industrial data, in particular in process automation. The industrial standard protocol OPC UA defines a manufacturer-independent information model and communication amongst components industrial automation control system with the purpose of interchanging industrial data, in particular in process automation. OPC UA define semantics in the form of documents and information models by a multiplicity of both, domain-independent and domain-specific semantics in order to enable interoperability between industrial machines.

These standard specification documents usually contain thousands of pages of textual information. For example, the OPC UA core specification alone contains around one thousand pages of information. Moreover, OPC UA also defines companion specifications to further define domain-specific semantics for a growing number of specific domains. Currently there are 28 companion specifications available, and this number is increasing significantly every year.

The information such as the semantics, the rules that should be fulfilled by the industrial components or machines to use these standards are all defined in these specifications. Only experts can understand them and use them. Currently there is no automated way to extract this valuable information from the industrial standard documents and formalize it in a meaningful manner.

To date, the formalization of semantics or validation of rules from the industrial standard documents has been done manually in a tedious and time-consuming manner. Moreover, only experts having a deep knowledge of the standards are able to implement the standards in information models of a given automation control system. Still further, a significant amount of time and effort is required to automate the process of validation of information models based on the industrial standards. First of all, the rules defined in the standards in textual format have to be identified by an expert. After that, these rules have to be formalized using a machine understandable language.

Consequently, existing information models have to be validated against the formalized rules. This process is extraordinary laborious, since the standards are voluminous with thousands of pages of specification.

Moreover, the standard specification may be supplemented with application examples or accompanying specification documents, as it is the case with companion specifications of the OPC UA standard. Although these companion specifications are domain-specific, particular companion specifications may be mandatory for particular domains. As a result, the procedure described above may have to be repeated for a multiplicity of companion specifications.

In case of OPC UA, an OPC UA expert has to manually identify the rules in the base specification and a semantic expert has to formalize a part of the identified rules in a standardized semantic web language, using validation instruments for validating graph based OPC UA data against a set of conditions.

The exemplary embodiments described below aim to automate this lengthy and labor-intensive process at least partially and thus to make it much more efficient.

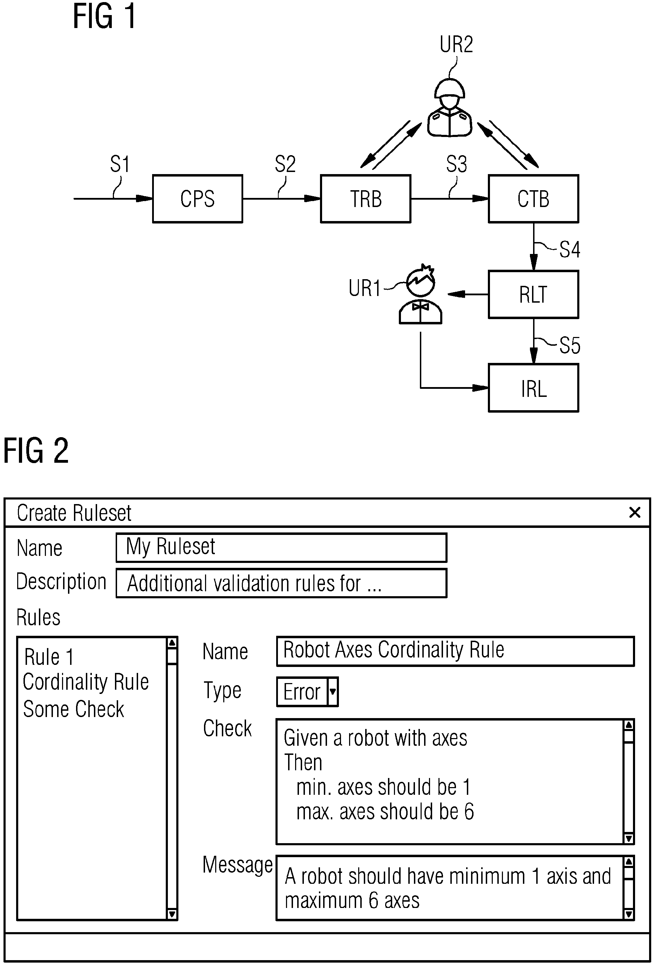

In FIG. 1 a flowchart of an exemplary method for transforming an industrial standard specification into at least one instantiated rule is shown.

At Step S1 at least one text corpus CPS pertaining to an industrial standard specification is loaded into a - not shown - memory assigned to a - not shown - semantic processing module. The text corpus CPS may include specifications in a textual format pertaining to an industrial standard such as OPC UA, or IEC standards (e.g., IEC 61850), etc. The human-readable text corpus CPS is loaded into the memory in a machine-readable manner or, if necessary, rendered machine-readable from paper documents using document digitalization technologies including scanning and OCR (optical character recognition) techniques.

At Step S2 the one or more text corpora CPS are semantically processed by a - not shown - semantic processing module to identify one or more textual rule blocks TRB and to extract at least one of said textual rule blocks TRB. A user UR2, particularly a semantic expert UR2, may be involved in the process of reviewing extracted and classified textual rule blocks.

Step S2 comprises semantically processing, by a - not shown - semantic processing module, the one or more text corpora CPS of the industrial standard specification to identify one or more textual rule blocks TRB and to extract at least one of said textual rule blocks TRB.

According to some embodiments, industrial standard core specifications may refer to companion specifications and vice versa. Domain-specific vocabularies and/or semantics as defined in the core specification are used across one or more companion specifications while one or more companion specifications may additionally define their own domain specific vocabularies and/or semantics. In order to deal with this type of intersectional or dynamic relationships situations, the processing may dynamically identify domain-specific information in more than one text corpus - e.g., comprising a core specification and one or more companion specifications - in order to add the identified domain-specific information to one of the text corpora CPS during - or »on the fly« - the semantically processing .

In an exemplary embodiment, unstructured data within the specifications may be accessed by an extraction module. The extraction service may parse unstructured data while also associating the source document with the unstructured data. The parsed unstructured data may be sent to a capture schema and then sent to one or more commercial, open source, or custom developed transformation components capable of extracting individual pieces of data from unstructured text, determining the topic of a section, extracting a section of text from a whole document, matching names and addresses, and other text and data processing activities.

In order to dynamically identify domain-specific information in the specification documents and adding domain-specific information to one or more text corpora during the extraction process, the extracted data may be combined with data already extracted by the optional capture schema.

In an exemplary embodiment, an extraction algorithm of the semantic processing module is trained with presently or previously standard specification text corpora and reviewed or trained with respect to its results, i.e. textual rule blocks TRB as eventually inferred by this step S2. The extracted textual rule blocks TRB may be reviewed by a semantic expert UR2 expert, judged with respect to the quality of the extraction process and used to improve the algorithm of the extraction process.

In an exemplary embodiment, rules within the specification of an industrial standard specification may be manually identified, classified, and formalized by the semantic expert UR2. These formalized rules may be used as a gold standard for training the extraction algorithm or for simply comparing the humanly selected rules with rules extracted and/or classified by the method according to the present embodiments.

In a subsequent step S3 a textual rule blocks TRB is classified, by a - not shown - classification module, into one or more of a plurality of rule categories in order to obtain a classified textual rule block CTB.

According to an embodiment, one or more rule categories are provided, wherein one or more rule categories are used for a classification of constraints or rules in the industrial standards. These rule categories may be previously defined and may include:
- a cardinality rule;
- a datatype rule;
- a domain-range rule;
- a property rule;
- a value rule;
- a duplicate rule;
- an instances-against-types rule;
- a subtyping rule;
- a scope/access rule; and/or;
- a bidirectional property rule

Most of the rules defined in the industrial standards may be classified into one or more of the rule categories as shown above. For example, a textual rule block TRB expressed by a text passage in the standard such as: »a robot can have minimum 1 axis and maximum 6 axes« belongs to the rule category »cardinality rule« as shown above, since this rule validates the cardinality of axes of a robot.

Similarly, a textual rule block TRB expressed by a text passage in the standard such as: »the identifier of a node should of the URI datatype« is a rule that belongs to the rule category »datatype rule« since it restricts the datatype.

In step S3 one or more of textual rule blocks TRB extracted by the previous step S2 are classified into these rule categories to obtain a classified textual rule block CTB.

The extracted textual rule blocks TRB are input to a classification algorithm which classifies the textual rule blocks TRB into one or more of the rule categories. In this manner, the rules in the industrial standards are classified into categories. The resulting classified textual rule blocks CTB may be reviewed by the semantic expert UR2 judging the quality of classification. Conclusions of the judging of the expert UR2 may then be used to further improve the classification algorithm.

At Step S4 at least one rule template RLT is assigned to at least one classified textual rule block CTB. This assignment by a - not shown - mapping module may be at least driven by one of said rule categories assigned to the classified textual rule block CTB. Further on, this assignment may include a suggestion of the rule template RLT assigned to at least one classified textual rule block CTB by a user UR1. In contrast to the second user UR2, the first user UR1 does not have to be a semantic expert. The first user UR1 may be, for example, a process engineer without special semantic knowledge.

The assignment of a rule template RLT to a classified textual rule block CTB actualizes a template-based approach which is formative of the present embodiments. This template-based approach particularly grants for a significant simplification and acceleration in a process of formalizing rules, as will be explained hereinafter. Formalized rules may mean rules being able to be interpreted and processed by a machine. If an information model is given as input, then using a formalized rule the information model can be validated automatically.

For at least one rule category as described above, one or more formalized rule templates RLT may be provided. The rule templates RLT may be predefined. The rule templates RLT may be predefined by a semantic expert.

Semantic Web languages such as SHACL (shapes Constraints Language) or shEx (Shape Expressions) may be used to formalize the rule templates RLT. In alternative embodiments, rule templates RLT may also be formalized and validated programmatically e.g., using programming languages such as Python etc.

The following section shows a SHACL sharp template for validating the cardinality rule shown above. This SHACL sharp template may have been por-defined by a semantic expert for this category:

```
 opcuashapes:<Shape_Name> a sh:NodeShape ;
 sh:targetClass <Node_name> ;
        sh:property [
               sh:path <Reference_name> ;
               sh:minCount <minCardinality> ;
               sh:maxCount <maxCardinality>;
               sh:message <violation_message_string>
          ] ;
 .
```

The previous example declares that nodes conforming to the shape targetClass must have a property sh:path with a reference to a path referenced by a reference or rather placeholder <Reference_name>. Further on, the nodes must conform to a property sh:minCount whose values must conform with a minimum count or minCount referenced by a variable <minCardinality> and to a property sh:maxCount whose values must conform with a maximum count or maxCount referenced by a variable <maxCardinality>. Nodes conforming to this shape further must have a property sh:message being a string referenced by <violation_message_string>.

The following section shows a SHACL sharp template for validating the datatype rule shown above:

```
 opcuashapes:<Shape_Name> a sh:NodeShape ;
 sh:targetClass <Node_name> ;
       sh:property [
               sh:path <Reference _name> ;
               sh:datatype <xsd_datatype> ;
               sh:message <violation_message_string>
          ] ;
```

The previous example declares that nodes conforming to the shape targetClass must conform to a datatype property sh:datatype which specific property value is referenced by a reference entitled <xsd_datatype>.

Based on the rule categories assigned to the classified textual rule block CTB, one or more rule templates RLT may be automatically assigned to a classified textual rule block CTB. The resulting rule templates RLT are the formalized rule templates.

At step S5 the rule template RLT is instantiated, by a - not shown - instantiating module, to eventually obtain the instantiated rule IRL. In the process of instantiating the instantiating module adapts the rule template RLT by constraints of the information model of the industrial automation control system to obtain the instantiated rule IRL.

In an alternative embodiment, these formalized rule templates RLT may be presented to a user in a visual format. This user interface is adapted to meet skills of the user UR1, which may not be familiar in understanding the formalized rule templates as formulated in a SHACL sharp template shown above.

In this alternative embodiment, an editable representation of the rule template being adapted by said constraints of the information model is presented to the user UR1 by a user interface defined by the instantiating module. The instantiating module consequently receives at least one input from the user UR1 to form an amended rule template RLT and, eventually, an input by the user concluding the instantiation.

In an alternative embodiment, an additional input may be provided by the user UR1 categorizing the rule template RLT as a formalized rule template.

In FIG. 2 a user interface of an instantiating module according to an embodiment is shown. The cardinality rule to be instantiated with an assistance of the shown user interface may be instantiated by the user UR1 using regular input fields - e.g., string or integer input fields, confirmation buttons, drop down menus, checkboxes etc. - instead of using a formalized language such as SHACL. As shown in n FIG 2, input fields for a name and a description of the rule templates are provided for input or amendments. Furthermore, an error message may be defined, which is returned in the event of inputting an incorrect argument.

Using the user interface as shown, a cardinality rule template may be instantiated according to the following example of an instantiated cardinality rule:

```
 opcuashapes:ObjectTypeAttributesShape a sh:NodeShape ;
 sh:targetClass <opcua:ObjectType> ;
        sh:property [
            sh:path ia:nodeId ;
            sh:minCount 1 ;
            sh:maxCount 6;
            sh:message "nodeId is mandatory for ObjectType Node"
          ] ;
```

The previous example of an instantiated cardinality rule shows the effect of instantiation: references - which have been noted in <angle brackets> - of the previous example of the non-instantiated cardinality rule are now resolved in favor of instantiated values, e.g.:

```
     sh:path ia:nodeId
 instead of:
     sh:path <Reference_name>
```

The previous example declares that nodes conforming to the shape for an ObjectType in the OPC UA protocol have to conform to a property sh:minCount whose values must conform with a minimum count or minCount of 1 and to a property sh:maxCount whose values must conform with a maximum count or maxCount of 6. Nodes conforming to this shape further must have a property sh:message being a string »nodeId is mandatory for ObjectType Node«.

In summary, the template-based approach grants for an efficient way of identifying rules in industrial standard documents along with extracting, classifying, instantiating and formalizing these rules with minimal user intervention or user input. Predefined rule templates may be created by experts and may be used for formalization still allowing a user to be involved for controlling and/or monitoring the process.

In addition to transforming an industrial standard specification, the embodiments may be further used for facilitating an implementation of rules customized for a specific industrial automation control system. If a process engineer intends to create custom rules for the information model specific to the industrial automation control system, the embodiments are able to ease this intent in that the process engineer may simply formulate a specific rule in a natural language or human-readable format. Using the embodiments, the human-readable rule may be transformed to deliver a suitable rule template, which can be easily formalized, instantiated and used to amend the information model.

As more and more OPC UA accompanying specifications have been developed by the OPC Foundation and other sub-organizations in recent years, the present embodiments help to facilitate rapid extraction and formalization of rules which are previously formulated in a human-readable natural language.

The embodiments are less prone to errors since humans may be involved in a loop of reviewing and/or assisting a process according to the described embodiments. In addition, the process according to the described embodiments is less error-prone, since it does not exclusively rely on a human and possibly error-prone extraction, although a human expert and/or user may always be involved in the loop for influencing or controlling the process.

Validation can be widely employed across multiple industrial standards which ensures a compliance of information models to the standards and ultimately ensures interoperability between industrial machines, which in turn supports progresses in industrial automation itself.

While an example manner of implementing the exemplary method is illustrated in FIG. 1, one or more of the elements, processes and/or devices illustrated in FIG. 1 may be combined, divided, re-arranged, omitted, eliminated and/or implemented in any other way.

Further, the example semantic processing module, the example classification module, the example mapping module, and/or the example instantiating module may be implemented by hardware, software, firmware and/or any combination of hardware, software and/or firmware.

Thus, for example, any of the example semantic processing module, the example classification module, the example mapping module and/or the example instantiating module could be implemented by one or more analog or digital circuits, logic circuits, programmable processors, programmable controllers, graphics processing units, digital signal processors, application specific integrated circuits, programmable logic devices and/or field programmable logic devices.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A computer-implemented method for transforming an industrial standard specification into at least one instantiated rule for amending an information model of at least one component of an industrial automation control system, the method including the steps of:
a) loading at least one text corpus pertaining to the industrial standard specification into a memory;
b) semantically processing, by a semantic processing module, the text corpus to identify one or more textual rule blocks and to extract at least one of said textual rule blocks;
c) classifying, by a classification module, the textual rule block into a plurality of rule categories to obtain a classified textual rule block;
d) assigning, by a mapping module, at least one rule template to the classified textual rule block, wherein said assigning is at least driven by one of said rule categories assigned to the classified textual rule block; and;
e) instantiating, by an instantiating module, the rule template being adapted by constraints of the information model of the industrial automation control system to obtain the instantiated rule.

2. The method according to claim 1, wherein the step of instantiating said rule template includes the steps of:
e1) presenting, by the instantiating module, an editable representation of the rule template being adapted by said constraints of the information model to a user
e2) receiving, by the instantiating module, at least one input from the user to form an amended rule template; and;
e2) receiving, by the instantiating module, an input by the user concluding the act of said instantiating.

3. The method according to claim 2, including the step of receiving, by the instantiating module, an input by the user categorizing the rule template as a formalized rule template.

4. The method according to claim 1, wherein the step of assigning said least one rule template to the classified textual rule block is succeeded by the steps of:
d1) presenting, by the mapping module, an editable representation of the rule template assigned to the classified textual rule block to a user for optionally receiving amendments from the user; and;
d2) receiving, by the mapping module, an input by the user concluding the act of said assigning.

5. The method according to claim 1, wherein the at least one rule template comprise one of:
- a cardinality rule;
- a datatype rule;
- a domain-range rule;
- a property rule;
- a value rule;
- a duplicate rule;
- an instances against types rule;
- a subtyping rule;
- a scope/access rule; and/or;
- a bidirectional property rule.

6. The method according to claim 1, wherein the at least one rule template and/or the at least one instantiated rule is expressed by a shape template expressed by a shapes constraint language (»SHACL«).

7. The method according claim 1, wherein amending the information model of the industrial automation control system includes the steps of:
- querying the information model within a memory space of at least one server of the industrial automation control system;
- allocating an address space of the information model; and;
- loading the instantiated rule into the allocated address space of the information model.

8. The method according to claim 1, wherein the at least one component of the industrial automation control system is an automation control server.

9. The method according to claim 1, wherein the at least one component of the industrial automation control system is an industrial device.

10. The method according to claim 1, wherein the information model is organized in a graph database or knowledge graph.

11. The method according to claim 1, wherein the information model is a central or decentral data base for hosting knowledge artefacts, in particular knowledge artefacts known as digital twins.

12. An apparatus for transforming an industrial standard specification into at least one instantiated rule for amending an information model of at least one component of an industrial automation control system, the method including the steps of:
a) a memory for being loaded with at least one text corpus pertaining to the industrial standard specification;
b) a semantic processing module for semantically processing the text corpus to identify one or more textual rule blocks and to extract at least one of said textual rule blocks;
c) a classification module for classifying the textual rule block into a plurality of rule categories to obtain a classified textual rule block;
d) a mapping module for assigning at least one rule template to the classified textual rule block, wherein said assigning is at least driven by one of said rule categories assigned to the classified textual rule block; and;
e) an instantiating module for instantiating the rule template being adapted by constraints of the information model of the industrial automation control system to obtain the instantiated rule.

13. A non-transitory computer readable medium comprising instructions which, when executed, cause at least one processor to:
a) load at least one text corpus pertaining to the industrial standard specification into a memory;
b) semantically process the text corpus to identify one or more textual rule blocks and to extract at least one of said textual rule blocks;
c) classify the textual rule block into a plurality of rule categories to obtain a classified textual rule block;
d) assign at least one rule template to the classified textual rule block, wherein said assigning is at least driven by one of said rule categories assigned to the classified textual rule block; and;
e) instantiate the rule template being adapted by constraints of the information model of the industrial automation control system to obtain the instantiated rule.
